# EUROPEAN PATENT APPLICATION

(11) **EP 1 204 080 A1**
(43) Date of publication of application: **08.05.2002**
(21) Application number: 01204233.9
(22) Date of filing: 05.11.2001
(51) Int. Cl.: G07F 7/10

(54) **Method and system for adding a service to an apparatus comprising a memory and a processor**

(30) Priority: 06.11.2000 NL 1016547
(71) Applicant: Interpay Nederland B.V., 3526 LB Utrecht (NL)
(72) Inventor: Tji, Kok Tjoe, 3706 BM Zeist (NL)
(74) Representative: Land, Addick Adrianus Gosling

(57) **Abstract**

Method for adding service data for a service to an apparatus comprising a memory and a processor, using at least one read/write device for reading data from and writing data to the apparatus, comprising the following steps of:
- performing one or more checking steps;
- reading data pre-stored in the memory of the apparatus in order to gain access to an empty memory part which is necessary for additional placing of data and/or instructions to be added;
- writing to the memory data and/or instructions to be added, characterized in that the service data is fed from at least one central databank to the read/write device.

## Description

The present invention relates to identification modules such as chip cards which are used to store data relating to services and which are provided with keys for access control in respect of data. This application also relates to a method for adding such services to such cards.

From the European patent application EP 0 818 761 is known a method for adding service data to a chip card by means of a computer which makes use of a chip card reader. It is possible herein to add services in predetermined service locations which are classified in predetermined files. These files are protected by means of keys, using which a card read/write device gains access to the files.

A drawback of the above method is that the service data is added at the same location as the computer. It is hereby necessary for the card to be linked locally to the computer in order to perform the method. This method also results in a limited security in that all services are protected by means of the same set of keys.

Such a security is insufficient in the banking world where use is made of chip cards on which the client data, service data and service-specific keys are added per service during the personalization process.

These cards are provided with a high security. All services are added at the moment of personalization, whereafter it is no longer possible to add services. The lifespan of the cards is however increasing, and it is not always possible to anticipate whether a new service will be required during this lifespan. The card must therefore be replaced if a new service is required. This replacement costs time and money. It also costs money to add services which a card holder will perhaps never want to use at all in the period during which he possesses the card.

In order to improve the prior art, the present invention provides a method for adding service data for a service to an apparatus comprising a memory and a processor, using at least one read/write device for reading data from and writing data to the apparatus, comprising the following steps of:
- performing one or more checking steps;
- reading data pre-stored in the memory of the apparatus in order to gain access to an empty memory part which is necessary for additional placing of service data and/or instructions to be added;
- writing to the memory service data and/or instructions to be added, characterized in that the service data is fed from at least one central databank to the read/write device.

In a preferred embodiment this method has the objective that the apparatus with a memory and a processor is a chip card. An advantage of this method is that for the first time services can hereby be added to a card and that any conceivable service can even be added to a card. That is, services which have not yet been devised at the moment the card is produced can still be added later. The advantages are therefore twofold: services which are not required at the moment of production do not have to be added to a card, which saves memory space, and addition is possible if there is a demand therefor. Cards can hereby be issued without services, which gives the card holder maximum flexibility in respect of his/her choice of possible services.

In a preferred embodiment the service data to be newly added comprises key data. As stated above, it is important that the services to be added are secured per se. For this purpose this embodiment provides the option of writing unique keys to the card as part of the service data. This preferably relates to personalized keys which are unique to the combination of card and service. These keys are therefore preferably generated on the basis of unique keys identifying the card and unique keys identifying the service. By making use of such keys the use of the services is very highly secured after placing on the card, whereby the card becomes suitable for transactions such as payment or authentication.

In a further preferred embodiment the service data is stored in files in the memory of the apparatus. These files are preferably ordered in a hierarchical tree structure with a master file under which are arranged a number of application files. The master file herein comprises inter alia data for unique identification of the card. Such a file lay-out has the further advantage that the free space for storing data in the memory can be freely classified. It hereby becomes possible to physically store services requiring very little memory space and services requiring very large memory space successively in very efficient manner without memory space being lost.

The files preferably comprise information, and this information is ordered in distinguishable sub-files. This has the advantage that all service data of a service can be stored in one file, while an efficient arrangement of the data can also be created per service. A good localization of specific date is for instance hereby possible as well as a more efficient memory. A small service takes up physically less memory than a large service.

Further preferred embodiments comprise the optional following steps of:
- making card write instructions for writing onto the card data and/or instructions to be added, being data and/or instructions arranged in a data format suitable for writing onto a card, reading service data from a databank, being data relating to services on the basis of which card instructions can be made using data from the card and encoding operations, converting service data into card write instructions by making use of data pre-stored in the memory, verifying the card holder by means of a check on the PIN, checking steps which comprise the following steps of:

- checking whether master files are present on the card;
- checking whether the blocking status has the value no;
- checking whether the amount of free space present on the card is sufficient to add the desired service.

The service data comprises a unique service identification and service information, and the service data consists of a plurality of parts of service instructions. The data of the card necessary for additional placing of new data comprises data which indicates how much space there still is, a reference which indicates which slot on the card is the final one, a reference which indicates in a services index which first memory position on the card is free, and/or a reference which indicates at the level of the master file which first memory position is free.

In order to make operational a card onto which new service data has been written in the form of card instructions, index data has to be updated as closing step in updating the card.

Some of the drawbacks which have occurred in practice can be obviated with the described embodiment. It is now possible for instance to issue cards to card holders with a minimum number of services to be agreed by the card issuer with the card holder. In the course of time, if the card holder needs new functions or services, new services can be additionally placed. However, the security of the method for adding the new services must preferably be at least as high as that of the existing card so as to prevent card misuse and to ensure the confidence of the card holders in their cards.

This is possible when all components which are used in the above described method are placed at a secure location and are not accessible by means of for instance computers and computer networks. This would mean that in order to add service data the card must be taken in secure manner to the secure central point where all components for performing the method are available. This is a drawback, for instance because the card holder has no card available during this time.

In order to obviate these drawbacks, a method is provided for performing the above described steps, wherein the databank with the service data and the databank with the key data are located remotely for access via one or more networks, comprising the following steps of:
- encoded sending of a request to receive service data to the databank with service data,
- receiving an encoded reply comprising the requested service data from the databank with service data.

The databank with the service data and the databank with the key data are further located remotely for access via one or more networks, comprising the following steps of:
- encoded sending of a request to receive card instructions for card data from the databank with service data;
- encoded receiving of card instructions from the databank with service data.

A further embodiment provides a method wherein the databank with the service data and the databank with the key data are further located remotely for access via one or more networks, comprising the following steps of:
- encoded sending of a request to receive encoded keys from the databank with the key data;
- encoded receiving of encoded keys from the databank with the key data.

In a preferred embodiment files are stored in the memory of the apparatus. Files consist of a header part (header, title) and information. Files are preferably provided with sub-files which comprise data relating to the cards, the memory and/or services thereof. The files are preferably ordered in a hierarchical tree structure with a master file under which are arranged a number of application files (ADF, application data file). Information is stored in these files, and this information is ordered in distinguishable sub-files.

A further aspect of the invention comprises a system for use of the method, comprising:
- at least one key carrier for secure storage of key data for use in bank cards;
- at least one central computer for processing service data and making it available in encoded form for the method;
- at least one decentral computer for performing the method; and
- one or more computer networks for connecting said devices for the purpose of performing the method. The system can be further provided with a read/write device for inputting card instructions into the memory of the bank chip card.

Using these preferred embodiments it is possible to add services at any random location where equipment for performing the method is placed, and a card on which a card holder wishes to have a new service can be provided with a new service within a few minutes. This invention makes it possible to supply a card with a minimum of services and to only add services which the user needs.

This also has the advantage that no services have to be placed for which the card holder will perhaps never have any need. Since the amount of memory space on a card is limited, for instance 8 or 16 KB, this has the advantage that memory space can be saved and can be used for services which the card holder does actually need. The method is particularly advantageous in the case use is made of an apparatus wherein memory space which has been used once can no longer be reused for other data.

A further preferred embodiment of the present invention is that the apparatus with a memory and a processor is a token. A token is an identification and/or authentication device which can for instance be connected to a computer, a telephone, an organizer or a car. Using the token the holder thereof obtains rights and/or the option to perform transactions. Services can be added to the token using the method. The token can be equipped with for instance a serial or a usb connector, Blue tooth of other communication option.

Further advantages, features and details of the present invention will become apparent from reading of the following description of a preferred embodiment with reference to the accompanying figures, wherein:
- fig. 1 is a block diagram in which the steps and data flows of a method of an embodiment are shown.
- fig. 2 is a block diagram showing a system which the method of fig. 1 can perform in distributed manner.
- fig. 3 is a block diagram of a hierarchical tree structure of a file structure in the memory of an embodiment of the invention prior to performing the method.
- fig. 4 is a block diagram of a hierarchical tree structure of a file structure in the memory of the embodiment of fig. 3 after performing the method.

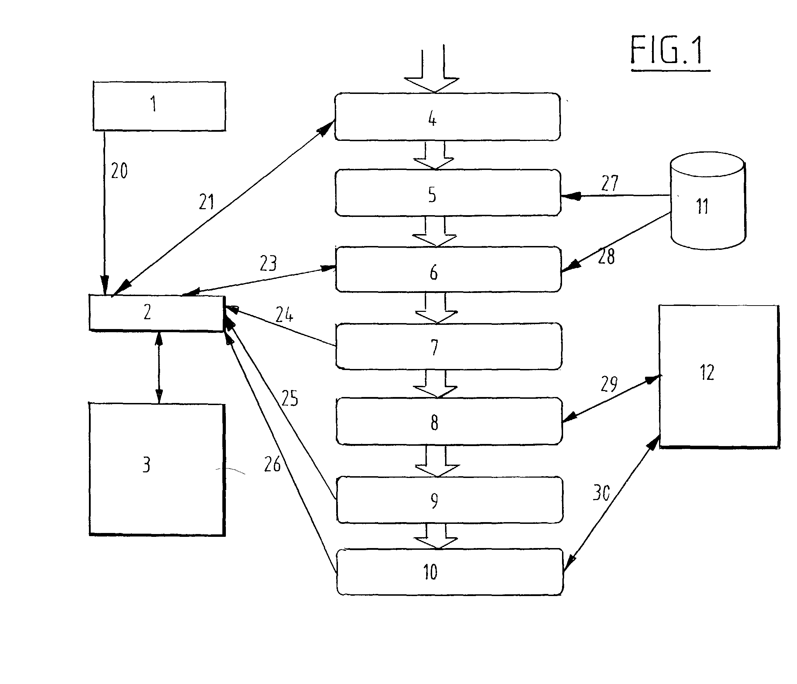

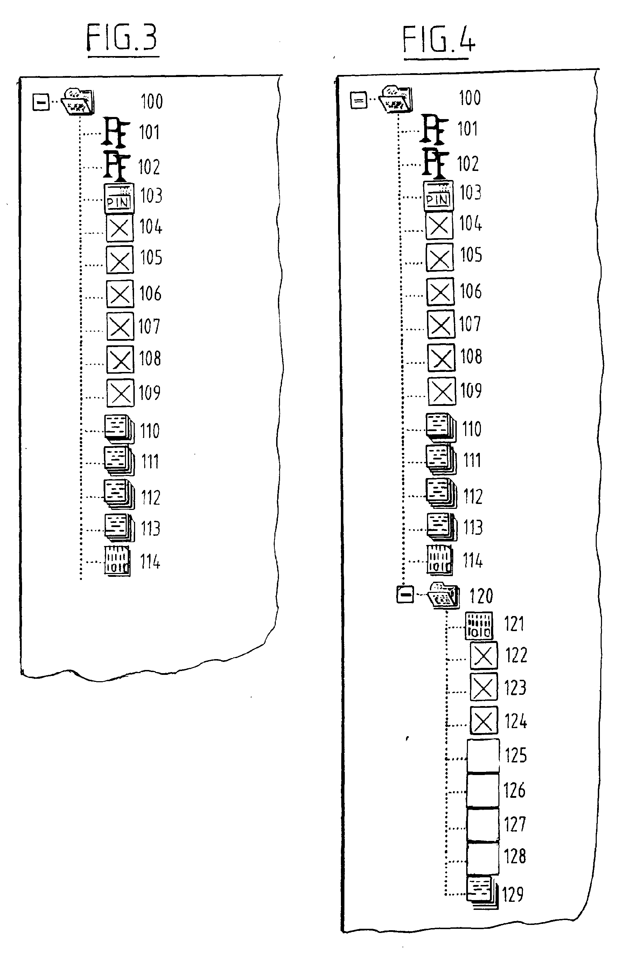

In an embodiment (fig. 1) a service known as "EASYSIGN" is added to a bank chip card. This card (of the CC 1000 type) consists of a processor and a memory. Files are stored in this memory (fig. 3 and 4). The files are defined as files at different levels. At the top is the master file (MF) 100. Sub-files 101-114 exist inside this master file. Below this master file can be situated application files 120 (service files, slots, application dedicated files, ADFs). In the same manner as with the master file, a service file also has available sub-files 121-129.

Master file 100 consists of a number of sub-files at MF level. In the same way an ADF consists of sub-files at ADF level. An issued card in the possession of a card holder comprises at least one master file with a minimum number of sub-files for the operation of the card at MF level. These files contain inter alia keys for card identification.

These files further contain the PIN with which the card holder can be authenticated in relation to the card. Files are written in smallest data quantities of one word. A word consists of 4 bytes. If fewer than 4 bytes are needed for a specific amount of information, the beginning of the word forms the information and the rest is supplemented, in the case of binary information, with ones. The hexadecimal notation is followed in this document.

For instance sub-file 102 at MF level (public file 01h) comprises a differentiating data for identification of the card. Sub-file 103 at MF level (PIN) comprises the so-called PIN code of the card holder. If the card holder wishes to use a service on the card for which the PIN is required, it is possible by means of a verification by the card to determine whether the person who wishes to use the card is also the card holder. Sub-file 104 at MF level (issuer key version 0) comprises the master key (issuer key) of the card which is not used in the method. Sub-file 105 at MF level (secondary key #1 version 1) comprises a key at MF level for creating objects, i.e. for creating new files and sub-files. Sub-file 106 (secondary key #2 version 1) comprises keys for creating new general files at master file level. These are for instance keys for writing words in index files, being files which indicate where files are written in the memory, and other sub-files at MF level. Another sub-file 107 at MF level (Erasekey #2 version 1) comprises keys with which it is possible to erase the content of indexes of the card prior to writing new information at locations where there used to be information, for instance in an index file this must first be erased. This is possible with this key. Sub-file 110 at MF level (working file FDh) comprises a services index (application index) in which service identifications can be found. Identification codes for the services, the so-called RIDPIX, are in this application index. This is an ISO identification number issued by an agency authorized for this purpose by the EU. Sub-file 111 (working file FCH) comprises the facility index from which the position of the first free word of this index must be read for the method of this invention. Sub-file 112 at MF level (working file FCh) comprises file access data from which the position of a first free word of a newly made file must be read. Sub-file at MF level 113 (working file FEh) is the free space file. From this file is read the amount of space on the card still available for a new service.

A new service is written to the card in the form of card objects. A card object is a file or a sub-file. These files consist of service data, which is also referred to as application data. This data is made accessible for applications and card reader devices by means of the control system which is present on the card and which makes use of the keys stored in the files and/or sub-files. In order to add a new service the following card objects must be added: ADF 120, comprising the following sub-files: the access control file 121, the issuer key version 1 122, the issuer key version 2 123, the issuer key version 3 124, the Mac generation key version 1 125, the Mac generation key version 2 126, the Mac generation key version 3 127, the Mac generation key version 4 128 and the working file 01h 129. It is the case herein that issuer key and Mac generation key are card objects of the secret file type. In accordance with the above stated example in the description of the development of the free space file, it is also the case here that the index in hexadecimal numbers is D52800501020009.

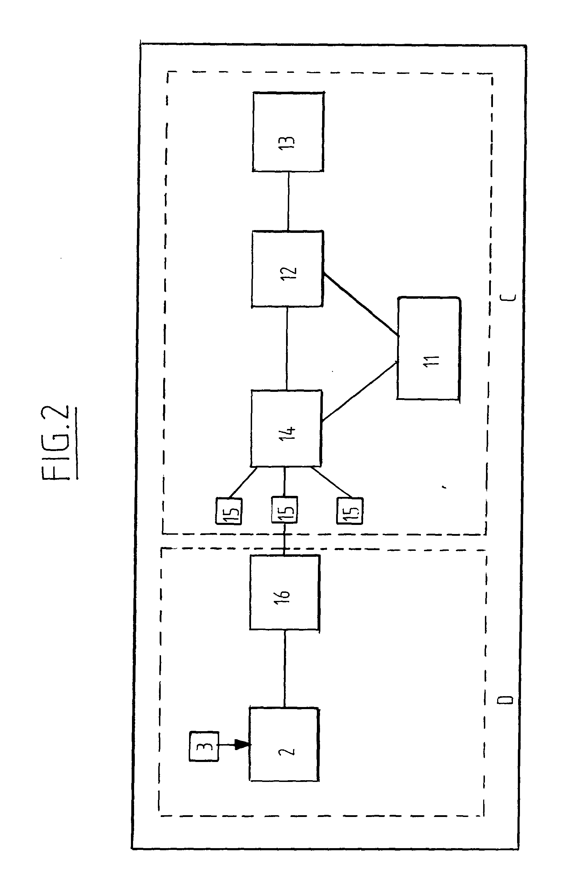

The situation on the card after adding of the service is shown in figure 4. As shown, a new file with a layer of sub-files thereunder has been created under the master file. If multiple services have to be created on such a card, these will have an ADF at the same or next lowest level as the now newly created ADF, with sub-files relevant to the service in each ADF. In this type of card, the CC 1000, the structure is fixed in a manner such that there are two levels of files, each with sub-files. In this embodiment (fig. 2) a new service is added to a bank chip card 3 already in the possession of a card holder 1. For this purpose the card can be inserted into a secure pinpad (2). This pinpad is connected to a computer 14 which is connected in turn to key carrier 12. Using this computer the method is performed consisting of the steps 4-10. Further available on the computer is a databank 11 which comprises data relating to card services, card service identification (RIDPIX), the size of the services and specific card structures. The numbered arrows between the blocks indicate information flows. Arrow 20 represents the input of the pin-code (PIN) by the card holder into the pinpad. The check on the pin-code is carried out inside the pinpad, i.e. the pin-code does not leave this device. The entered pin-code is transferred to the pass, the pass checks for correctness and returns a signal to this effect to the pinpad.

Arrow 21 indicates the information flows for the purpose of the card check by the method step 4. When a card is inserted in the read/write device, a number of checks are carried out in step 4 of the method. These checks entail testing for the presence of MF files 100-114. These MF files comprise data for the control system of the chip card. A check is also made as to the blocking status of the card. This means that a check is made as to whether the card is blocked. If it is blocked, no service can be added. A check is further made as to how much free space there still is on the card for adding of services. This information is in the free space file (113) on the card.

The following step 5 reads service data 27 from the data file 11. A service has a determined physical size. If the size of the service exceeds the free space still remaining on the card the service cannot be added. The size of the service is taken from the service data file 11. In step 6 data 23 is read from the card. If the size of the service exceeds the amount of remaining free space known from step 4, the free space file, the method is aborted. A service further has a unique identification, the RIDPIX (ISO). If the service is already on the card, the service does not have to be added. The RIDPIX of the service is taken from the service data file 11, whereafter a check is made as to whether it is already present in the application index 110 of the card. If the RIDPIX of the service for adding is found, the process is aborted. During this step data 28 of card structures forming part of the service are also read from the databank.

The following step 7 of this embodiment is the PIN verification. This is necessary because the card holder must be authenticated so as to know whether the correct person is adding a new service. As already stated, the PIN verification is done securely using the pinpad used in this embodiment because the PIN itself does not leave this pad. The method step 7 sends an instruction 24 to the pinpad. The PIN is entered by the card holder in a keyboard of the pinpad and an operation is then carried out in the card on this input which shows that the PIN is the correct one. A technical reason for performing the PIN verification is that a verification is required to enable writing to the application index. In the use of the type of chip card as in this embodiment, the PIN may only be entered on a secure terminal, i.e. the performing of the PIN verification takes place in the terminal and no data relating to the PIN is sent outside the terminal. The secure terminal may only call on a parameter-free function in the secure terminal to the external method with which the PIN verification is started inside the terminal.

The following step in this embodiment of the method is the translation of service data to card instructions. In the program which performs this part of the method the service is read in step (read service data) 5 from a service database 11. This information is however in a format for which the specific bank card of this method is not suitable. A translation must therefore be made from the data of the database to card-specific instructions. These general instructions are optionally supplemented with diversifying keys to make these instructions unique for use on this card, wherein the diversifying keys in the step (read card data) 6 are read from the card. Card objects are generally made from the service data, wherein the objects consist of object information and object instructions. These objects are suitable for conversion to card write instructions.

The above mentioned encoding takes place for the purpose of creating an ADF according to the embodiment using the key of the secondary key number 1 type which is in sub-file 105. The creation of a card object such as the ADF for the new service takes place by means of a so-called write header instruction, such as for instance for the bank chip card CC 1000 that is much used in the Netherlands. There are two variants of this instruction which differ from each other in whether or not they make use of keys present on the card. The usual write header instruction uses no key. Use is made for the secure write header instruction of a key already present on the card. This key is sent to the key carrier together with other service and card-dependent parameters. Cryptographic operations are then performed on this data. The result of these operations is returned in encoded form to the card.

During the secure write header instruction carried out by the card a reverse operation is performed on this data using the key present on the card so that the final result, a new card object, has precisely the properties as defined in the service databank. This will only succeed if the key of the card corresponds with the key on the key carrier. Successful running of a secure instruction therefore requires the card authentication of step 4, since this demonstrates that the keys on the card have valid values.

The card instructions are preferably not sent directly to the card, but placed in a card instruction buffer. Execution of the card instruction buffer takes place after the last card instruction has been placed in the buffer.

The data read during step 5 (read service data) for the purpose of the header of the ADF for placing and the offset diversifying data and random read during step 6 (read card data) are fed to the key carrier. This takes place in encoded manner because there is preferably only one (for instance nationwide) central key carrier and card holders prefer to have their services added in the vicinity of the (for instance dwelling) place where they are located. Data transport 29 is thus necessary which is carried out securely due to encoding. The key carrier uses a data encryption device (DEP) to carry out a series of cryptographic operations on the data presented to the key carrier. The result of these cryptographic operations, the so-called cryptogram, comprises in encoded form the header of the ADF to be written. Only by performing a card instruction wherein use is made of the corresponding card key can the header be written in the correct manner to the card. If the keys on the card and the criteria do not correspond, the card will be blocked during this operation. The resulting card instructions are placed in the buffer with card instructions. The subsequent card instructions are also placed in this buffer until all card instructions for adding the whole service have been created and these are written to the card in step 9.

Card instructions for the access control file (ACF) 121 are then written. This file is a Log file which does not have to be filled at this moment. The writing of header in similar manner as in the case of the ADF as described above is sufficient.

Further card instructions are made for the sub-file 122 comprising issuer key version 1. Use is made for this purpose of a secure write header instruction in similar manner as when ADF 120 is created. In contrast to when the ADF 120 and the ACF 121 are created, the content of the card object must be written after creation of the issuer key version 1 (IKV1). The key value of the key must be added. This takes place with a secure data write instruction. Using this card instruction the content of a card object can be created under the protection of a key. The content of this key for writing is located in the form of a cryptogram in the key carrier. As in the case of the above written instructions, this cryptogram is in fact a text file on the computer connected to the DEP. The precise location of the key for writing, name of the text file and position within the text file is found by coupling the RIDPIX and the KRP, this being an identifier for a key. The RIDPIX and the KRP together form a unique reference for a key within a service.

In order to find the key value in the key carrier and to create an encoded card instruction the following data must be fed to the key carrier as parameters: the RIDPIX of the service to be written, the KRP of the key to be written, the reference of the key to be written (consisting of the first two bytes of the header), a diversifying data of the key to be written and the random. As described, the RIDPIX and the KRP of the key to be written are used by the key carrier when a table is consulted with which the name of a text file and the location within this text file of the key to be written can be found. The reference of the key to be written, diversifying data and random are processed into the result of the encoding (cryptogram) finally generated by the DEP and also containing the key value of the key to be written. This key value has a length of two words (8 bytes). A secure write data instruction is added separately to the buffer for each word.

Card instructions are then made for the secret files of the MAC Gen type. The creation of a MAC Gen and writing of the key value proceeds in the same manner as in the case of the IKV1. In addition to a key value, the MAC Gen has sub-files as well as a so-called parameter word (and optionally an internal value or counter of 2 words length) These card instructions are also placed in the buffer.

The parameter word and the internal value of the MAC Gen key are read during method step (read service data) 5. The parameter word and the internal value of the MAC Gen key are transmitted as parameters to the key carrier together with the random and the identifying data of the key with which the creation takes place. As during the creation of the foregoing sub-files, a data write function is hereby created on the key carrier in coaction with the DEP. A cryptogram is once again also created by the DEP which for a MAC Gen key can be 1 or 3 words long depending on the occurrence of an internal value. The cryptogram is subsequently used to compose the secure write data and place it in the buffer.

During the creation of card instructions for file 129 (working file 01H) a start is also made with writing of the header. The content of this file is then checked for written words. This control takes place per region. Per region of written words a challenge is sent to the key carrier. Depending on the size of the written region, the result is included in one or more secure write data instructions in the card instruction buffer.

Finally, a Write Lock card instruction is added to the buffer. The utilization of the ADF is hereby placed and the control system of the new service enters into operation. Another consideration is that the card automatically selects the ADF during performing of this instruction. This makes the random number generated in method step 5 unsuitable for updating index files in the master file, since write commands can only be performed in one file per created random. This brings step 8 to an end. In step 9 the data 25 in the buffer are transferred to the file to be newly written (ADF, slot) on the card.

After writing of the Lock the master file is selected and a random is generated once again. Using the data read in method step 6, secure write instructions, optionally preceded by secure remove instructions (if writing takes place over existing words) are finally placed in a new buffer. The executing of this card instruction buffer concludes the method of the present invention.

For the final step 10 of this method, updating of the index data, a new random is necessary because index data of this step are updated at the master file level and writing of new service data 26 to the card is done at a lower level. Secured data transport 30 to the central key carrier 12 is also necessary in this step. The remaining free space is further read from the card. A reference is also read of the last full slot on the card. This is necessary because it thus becomes known where it is possible to begin with writing of a new slot for a new service. The RIDPIX offset is also read from the application index 110. The first free word in the application index can hereby be determined. Finally, the offset is read of the position of the first free word at master file level. After adding of the new service the file structure in the memory of the bank card appears as in fig. 4. New are file 120 and associated sub-files 121-129 of the new service. The content of a few sub-files at master file level is also modified in respect of this new service. These changes are described in the following.

The application index 110 is provided by the method with a new RIDPIX service identification. Prior to adding of the service this application index is empty. This means that there is no service identification therein. In the only word of this file containing information there is now 01 FE FF FF, wherein the first byte is the version number and the second byte is an indicator as to whether the sub-file is in use.

After adding of the service, two words are added to the application index. In these two words are the RIDPIX of seven bytes, D52800501020009, and a byte for the serial number, 01, of the ADF with which the service can be found.

The content of the facility index 111 is also altered during adding of the new service. Prior to adding of the service this also contains only one word with information. This word is 00 3F FF FE. The first two bits of the second byte (3F = 0011 1111) indicate the version. The final bit in this byte (1) indicates the absence of a subsequent index file. The intervening bits in this byte (bits 3-7) are reserved for future use. If a subsequent index file were present, the reference of this index file would then be in the third byte. The first seven bits of the fourth byte (FE = 1111 1110) are reserved for future use. The final bit indicates whether the index can be used (0 = usable, 1 = in use, not usable).

After adding of the new service this file appears as follows: "01 3F FF FE 21 01 45 41 53 59 53 49 47 4E FF FF". It now therefore contains four words with information. The first byte in the first word, which indicates the number of facilities, has changed from 00h to 01h. The second to fourth words are written as follows. The first four bits of the first byte of the second word (21h=0010 0001) indicate that this is a certifier function (0001=balance 0010=certifier, 0011=caller). The last four bits of the first byte (0001) indicate the sequence of the relevant facility within the specified slot. The reference to this slot is in the second byte of the second word (01). There then follows the name of the service as this is shown on the display of a certifier. In this case EASYSIGN.

The slot access file consists prior to adding of the service of one word with information: 01 FE 00 FF. The first byte represents the version. The final bit of the second byte (FE=1111 1110) indicates whether the Slot access file may be used (0=usable, 1=not usable). In this case the Slot access file can be used. The third byte indicates the number of entries (access conditions) in the Slot access file. In this case that is 0.

After adding of the service there are four words with information: 01 FE 01 FF 01 FE 45 41 53 59 53 49 47 4E FF FF. In the slot access file the following changes have taken place. The third byte, which indicates the total number of access conditions, has changed from 00h to 01h. The first byte of the second word contains the reference of the slot to which the service has been written. The final two bits of the second byte in the second word (FE = 1111 1110) describe the access conditions. The value 10 indicates that permission of the card holder is required (other possible values 00=free, 11=forbidden). Finally, the name of the service, EASYSIGN, follows in the subsequent eight bytes.

Another file which is changed during adding of a service to the card is the working file FEh 113. If, prior to adding of the service, there are still 6584 bytes available, this is shown in the first two bytes of the free space file. In hexadecimal numbers this means that the first two bytes of the first word of the free space file are 19B8. The last written dedicated file has a reference 00 (master file) . After adding of a service of a size of 120 words (one word is 4 bytes), the content of the free space file is changed. The number of free bytes has decreased from 6584 to 6104 bytes. In hexadecimal numbers this is 17D8. The first two bytes of the free space file are therefore now 17D8 and the third byte of the free space file is 01 because the last written dedicated file is now that of the new service and no longer that of the master file 00.

A required card data can be service-linked. This is the case for instance with diversifying data. Diversifying data are unique for an issued card and used inter alia to make each key on the bank card unique for the card. The impact of breaking a diversified key in this way remains limited to one card. The reason that the card data is read after the service data in this embodiment is that it must be known of the service whether service-specific diversifying data occur therein. That is, whether data occurs in this service which is unique for this card. For instance in the case of the CC 1000, writing to the facility-index 111 and the service access file 112 will only take place if this service has to be accessible to the "chipknip" and optionally other future similar card readers. If this is the case, the first position in the first free word within the facility-index, the first position of the first free word within the service access file and the date on which the validity of the card expires have to be read from the card.

For elucidation of the system which performs the method in decentral manner according to the embodiment of fig. 1, there follows hereinbelow a description of fig. 2. The system is embodied in a central part C comprising the key carrier 12, the encryption peripheral (DEP) 13, the service database 11, a dial-in server (Remote Access Server) 14 and a number of modems 15. As described above in the method, the DEP creates encoded card instructions on the basis of keys from the key database, service data and card data. To enable secure transfer of these instructions to the card, they are encoded again before they are transmitted via the modems to the decentral part. In the first instance the central part is a single entity. A plurality of these systems can however also be provided, for instance per country or region.

The decentral part consists of a terminal 16 with communication facilities and a pinpad 2 in which the PIN can be placed. A choice has been made in this embodiment for a decentral part so as to be able to provide the card holders at their own location with new services on their card. A choice has also been made in this embodiment for a pinpad separate of the terminal. Both these devices can also take an integrated form.

In the case the apparatus is embodied as token for the purpose of authentication of a PC user, a PC can serve as terminal.

In the following paragraphs practical advantages of services for adding are disclosed on the basis of the EASYSIGN service given as example in the detailed description.

The EASYSIGN service offers a provider (bank, pizzeria, book-seller on the internet, etc.) the option of verifying the identity of a card holder. This verification makes use of the challenge - response mechanism and operates as follows. The card holder visits a web page, for instance via the internet. On this web page he/she then enters his/her identity. On the web page there is also a number, the so-called 'challenge'. The card holder places his card in a pinpad (certifier) and keys in the challenge thereon. The certifier, using one of the MacGen keys from the EASYSIGN slot, then calculates the response to this entered challenge. The card holder enters this response on the web page. The web-server checks whether the identity and response entered by the card holder belong together. If this is correct, the identity of the card holder is then determined on the server side. In accordance with the example given here of a card holder who operates via a PC with internet, other channels, such as for instance the telephone channel, can provide the same mechanism, wherein the EASYSIGN slot is used in the same manner.

Once a card holder has been authenticated, the service provider can give the card holder access to other (interconnected) services for which the card holder has access authorization. A school for instance can thus allow a card holder/student access to his/her course results.

As well as for authentication, the EASYSIGN slot can also be used via the challenge - response mechanism to ensure the integrity of data provided by the card holder to the service provider. A card holder can for instance secure a change of address provided by him/her with a certificate against changes by third parties. This certificate is generated using a MacGen key of the EASYSIGN slot.

The EASYSIGN slot can also be used to show that a particular card holder has initiated a determined e-commerce transaction. For instance when a card holder makes an order from a service provider, the service provider can then later show that this card holder initiated the order. In other words: the card holder cannot deny that he/she initiated the order.

Further information on this type of security system can be found inter alia in S. Singh, 1999, The Code Book, and B. Schneier, 1995, Applied Cryptography.

## Claims

1. Method for adding service data for a service to an apparatus comprising a memory and a processor, using at least one read/write device for reading data from and writing data to the apparatus, comprising the following steps of:
- performing one or more checking steps;
- reading data pre-stored in the memory of the apparatus in order to gain access to an empty memory part which is necessary for additional placing of service data and/or instructions to be added;
- writing to the memory service data and/or instructions to be added, **characterized in that** the service data is fed from at least one central databank to the read/write device.

2. Method as claimed in claim 1, wherein the apparatus with a memory and a processor is a chip card.

3. Method as claimed in claim 1 or 2, wherein the service data to be newly added comprises key data.

4. Method as claimed in one or more of the foregoing claims, wherein the service data is stored in files in the memory of the apparatus.

5. Method as claimed in claim 4, wherein the files are ordered in a hierarchical tree structure with a master file under which are arranged a number of application files.

6. Method as claimed in claim 5, wherein the files comprise information, and this information is ordered in distinguishable sub-files.

7. Method as claimed in one or more of the foregoing claims, wherein the files are stored in a freely available part of the memory.

8. Method as claimed in claim 2 or 3, further comprising the following step of:
- making card write instructions for writing onto the card data and/or instructions to be added.

9. Method as claimed in one or more of the foregoing claims, further comprising the steps of:
- reading service data from a databank,
- converting service data into card write instructions by making use of data pre-stored in the memory.

10. Method as claimed in one or more of the foregoing claims, further comprising the step of verifying the card holder by means of a check on the PIN.

11. Method as claimed in one or more of the foregoing claims, wherein the checking steps comprise the following steps of:
- checking whether master files are present on the card;
- checking whether a blocking status has the value no;
- checking whether an amount of free space present on the card is sufficient to add the desired service.

12. Method as claimed in one or more of the foregoing claims, wherein the service data comprise a unique service identification and service information.

13. Method as claimed in one or more of the foregoing claims, wherein the data of the card necessary for additional placing of new data comprises data which indicates how much space there still is, a reference which indicates which slot on the card is the last one, a reference which indicates in a service index which first memory position on the card is free, and/or a reference which indicates at the level of the master file which first memory position is free.

14. Method as claimed in one or more of the foregoing claims, further comprising the step of updating index data on the card.

15. Method as claimed in one or more of the foregoing claims, wherein the databank with the service data and the databank with the key data are located remotely for access via one or more networks, comprising the following steps of:
- encoded sending of a request to receive service data to the databank with service data,
- receiving an encoded reply comprising the requested service data from the databank with service data.

16. Method as claimed in one or more of the foregoing claims, wherein the databank with the service data and the databank with the key data are located remotely for access via one or more networks, comprising the following steps of:
- encoded sending of a request to receive card instructions for card data from the databank with service data;
- encoded receiving of card instructions from the databank with service data.

17. Method as claimed in one or more of the foregoing claims, wherein the databank with the service data and the databank with the key data are located remotely for access via one or more networks, comprising the following steps of:
- encoded sending of a request to receive encoded keys from the databank with key data;
- encoded receiving of encoded keys from the databank with the key data.

18. Method as claimed in one or more of the foregoing claims, wherein the apparatus with a memory and a processor is a token.

19. System for use of the method as claimed in one or more of the claims 1-18, comprising:
- at least one read/write device for reading data from and writing data to an apparatus comprising at least a memory and a processor;
- at least one decentral computer coupled to the read/write device;
- at least one key carrier for secure storage of key data for use in bank cards;
- at least one data file comprising service data;
- at least one central computer for producing card instructions on the basis of card data and service data; and
- one or more computer networks for transferring data between these parts.
